# EUROPÄISCHE PATENTANMELDUNG

(11) **EP 2 330 405 A1**
(43) Veröffentlichungstag der Anmeldung: **08.06.2011**
(21) Anmeldenummer: 09075525.7
(22) Anmeldetag: 30.11.2009
(51) Int. Cl.: G01N 11/14

(54) **Verfahren und Einrichtung zur Messung von Strömungswiderstandsparametern**

(71) Anmelder: Berlin Heart GmbH, 12247 Berlin (DE)
(72) Erfinder: Arndt, Andreas, 12555 Berlin (DE); Nüsser, Peter, 13347 Berlin (DE); Graichen, Kurt, 13189 Berlin (DE)
(74) Vertreter: Golkowsky, Stefan

(57) **Zusammenfassung**

Mittels der Erfindung werden in einfacher Weise Strömungswiderstandsparameter eines von einem Fluid durchströmbaren Elementes (24) mittels einer Axialpumpe (2, 12, 13) gemessen, wobei gleichzeitig über die Pumpendrehzahl der Volumenstrom und über die auftretenden Lagerkräfte eines aktiv geregelten Magnetlagers eine der Pumpenlast proportionale Druckdifferenz gemessen und diesem Wertepaar durch Vergleich mit einem Kennfeld ein Strömungswiderstandsparameter des zu vermessenden Elementes zugeordnet wird.

## Beschreibung

Die Erfindung liegt auf dem Gebiet der Messtechnik und bezieht sich insbesondere auf das Gebiet der Strömungsmechanik.

Strömungsmechanische Messtechniken und Verfahren sind grundsätzlich in vielfältigen Ausgestaltungen und Anwendungen bekannt. Entsprechende Messungen betreffen beispielsweise die Viskosität bzw. in Umkehrung dieser Größe die Fließfähigkeit von Fluiden und den Strömungswiderstand bzw. den Widerstandsbeiwert bei Bauteilen, die von einem Fluid durchströmbar sind. Auch dynamische Parameter wie die Trägheit der Flüssigkeitssäule in einem Bauteil oder die Elastizität der Wand des Bauteils bei zeitlich veränderlicher Durchströmung können experimentell ermittelt werden. Unter einem Fluid wird in diesem Zusammenhang sowohl ein Gas als auch eine Flüssigkeit verstanden.

Entsprechende Widerstandsbeiwerte werden bei fluiddurchströmten Bauteilen charakterisiert durch Strömungsrichtung, den Druckunterschied zwischen Stellen vor und nach Durchströmen des Bauteils sowie den Volumenstrom, der durch den entsprechenden Druckunterschied durch das Bauteil getrieben wird.

Dementsprechend lassen sich unter Messung der entsprechenden physikalischen Größen Widerstandsbeiwerte zuverlässig vermessen.

Bei vielen Anwendungen ist es jedoch nicht möglich, die entsprechenden Größen zu messen, oder man möchte den Messaufwand möglichst gering halten. Zudem ist es oft schwierig, Zugang zu den Stellen zu erlangen, an denen die entsprechenden Größen gemessen werden müssten.

Insbesondere in der Medizintechnik, wenn manche der fluiddurchströmten Elemente schwer zugänglich oder in ihrem Strömungswiderstandswert veränderlich sind, ist es von großem Vorteil, wenn eine derartige Größe wie ein Strömungswiderstandsparameter mit geringem Aufwand in kurzer Zeit, zuverlässig und genau gemessen werden kann.

Entsprechende strömungsmechanische Messgeräte sind grundsätzlich bekannt.

Aus der DE-A-2919236 ist ein Durchflussmessgerät mit einem Turbinenrad bekannt, das in einem geregelten magnetischen Lager gelagert ist.

Aus der US-Patentschrift 6581476 B1 ist ein in ein längs durchströmtes Rohr eingebauter Rotor bekannt, der in spezieller Weise axial magnetgelagert ist und mittels dessen sowohl Durchflussmessungen als auch Viskositätsmessungen durchgeführt werden können. Bei der Ausführung von Viskositätsmessungen an einem den Rotor umströmenden Fluid wird die Leistungsaufnahme eines Antriebs des Rotors in Abhängigkeit von der Drehzahl gemessen. Die Bestimmung der Viskosität beruht auf der Reibung zwischen der zylindrischen Rotoroberfläche und der Flüssigkeit bzw. innerhalb der bewegten Flüssigkeitsschichten.

Zudem ist aus der genannten Schrift bekannt, eine Axiallast auf den Rotor infolge einer Relativbewegung des Rotors zu messen und hieraus eine Viskositätsgröße zu ermitteln.

Grundsätzlich beziehen sich die messtechnischen Anwendungen eines derartigen Rotors jedoch lediglich auf die Vermessung der in ihm befindlichen Fluide.

Der vorliegenden Erfindung liegt vor dem Hintergrund des Standes der Technik die Aufgabe zugrunde, eine Einrichtung und ein Verfahren zur Vermessung eines fluiddurchströmbaren Bauteils zu schaffen, das nicht direkt zugänglich ist. Die Messung soll dabei möglichst einfach, mit geringem Aufwand und möglichst genauem Ergebnis durchführbar sein.

Gemäß der Erfindung wird die Aufgabe mit den Merkmalen des Patentanspruchs 1 gelöst.

Im Ergebnis soll durch die Erfindung bei einem noch nicht vollständig bekannten strömungsmechanisch wirksamen Bauteil der durch dieses Bauteil erzeugte Druckverlust in einer Fluidströmung vermessen werden. Dies geschieht prinzipiell durch Vermessung des Druckverlustes, insbesondere des Druckverlustes in Abhängigkeit von dem das Bauteil durchströmenden zeitlich konstanten oder veränderlichen Volumenstrom.

Um Messungen in unmittelbarer Nähe des unbekannten Bauteils zu vermeiden, werden die entsprechenden Größen von solchen Größen abgeleitet, die direkt an einer die Fluidströmung treibenden Pumpe erfasst werden können. Diese Pumpe wird möglichst direkt oder über eine in ihrer strömungsmechanischen Wirkung vernachlässigbare Druckleitung mit dem zu vermessenden Element verbunden, und die Pumpe wird zur Förderung des Fluids in Betrieb genommen.

Das unbekannte Bauteil kann, wenn die Eigenschaften der Pumpe bekannt sind, vollständig durch die Messung des Volumenstroms und entsprechender Pumpenlastwerte charakterisiert werden. Die Pumpenlastwerte entsprechen eindeutig dem jeweils in der Pumpe erzeugten Druckgefälle und können mit geringem Aufwand durch die auf ein entsprechendes Förderelement der Pumpe wirkenden Kräfte bestimmt werden. Ein solches Förderelement ist typischerweise durch einen Pumpenrotor gebildet, der gemäß der Erfindung in einem Magnetlager gelagert ist. Der Pumpenrotor wird vom Magnetlager radial passiv zentriert, während seine axiale Position aktiv geregelt wird. Zu diesem Zweck misst ein integrierter Positionssensor die axiale Rotorposition. Ein Regler ermittelt auf der Basis dieses Messwertes einen Steuerstrom. Der Steuerstrom wird durch ein elektromagnetisches Aktorelement geleitet. Damit kann die axiale Rotorposition gezielt verändert werden. Grundsätzlich sind mindestens 2 Methoden zur Regelung denkbar:
Erstens kann die axiale Position des Rotors auf Mittenposition geregelt werden. Es wird ein Strom durch das Aktorelement geleitet, der die angreifende Kraft, also die Last, kompensieren kann. Durch Messung des Stromes als Stellgröße kann somit die Last der Pumpe berechnet werden. Zweitens kann die 1. Ableitung der Position (Axialgeschwindigkeit) auf 0 geregelt werden. Damit wird der Rotor durch Einspeisung eines geeigneten Stromes in eine Position verschoben, an der die Permanentmagnetkräfte des Magnetlagers die Lastkräfte kompensieren. An dieser Position ist der Steuerstrom nahezu 0. Diese Regelung ist unter dem Begriff Virtual Zero Power Control (VZP) bekannt. Durch Messung der Position als Zustandsgröße kann in diesem Fall die Last der Pumpe berechnet werden.

Beide Größen (Strom und Position) stehen in einer Pumpe der genannten Art ohne weiteren Aufwand ohnehin zur Verfügung, so dass die zusätzliche Messaufgabe mit einer derartigen Pumpe mit geringstem Aufwand zusätzlich erfüllt werden kann.

Zur Vervollständigung der Messung wird lediglich jeweils beispielsweise die Drehzahl oder die Energieaufnahme des Förderelementes benötigt, um hieraus in Abhängigkeit von der Pumpenlast einen Volumenstrom zu bestimmen.

Den entsprechend gemessenen Größen können innerhalb eines gespeicherten Kennfeldes oder durch einen Algorithmus jeweils die benötigten Größen zugeordnet werden, wobei die Art des vorliegenden Fluids beachtet werden muss.

Die mit der Pumpe gebildete Messeinrichtung muss daher gegebenenfalls für verschiedene Fluide eingemessen werden, um entsprechende Kennfelder und/oder Algorithmen zu bilden.

Zur genaueren Charakterisierung des zu vermessenden durchströmbaren Elementes ist gegebenenfalls die Erfassung von Drehzahlen oder Energieaufnahmewerten und Pumpenlasten bzw. Lagerkräften bei verschiedenen Drehzahlen vorteilhaft.

Den entsprechenden Wertepaaren bzw. Gruppen von Wertepaaren oder Kennlinien, die somit durch das erfindungsgemäße Messverfahren und die Messeinrichtung aufgenommen worden sind, lassen sich damit zuverlässig Strömungswiderstandsparameter bzw. Widerstandsbeiwerte eines der Pumpe nachgeschalteten fluiddurchströmbaren Elementes genau zuordnen.

Eine besonders gute Charakterisierung des zu vermessenden Elementes kann vorteilhaft dadurch ermöglicht werden, dass die genannten Messungen nacheinander für verschiedene Fluide durchgeführt werden.

Die Erfindung bezieht sich außer auf das beschriebene Messverfahren auch auf eine Einrichtung zur Messung von Strömungswiderstandsparametern eines von einem Fluid durchströmbaren Elementes, das eine entsprechende Pumpe, eine erste Erfassungseinrichtung für die Drehzahl oder Energieaufnahme des Förderelementes und eine zweite Erfassungseinrichtung für die Last der Pumpe sowie eine Auswerteeinrichtung aufweist, die wenigstens einem Wertepaar aus einer Drehzahl oder Energieaufnahme und einer dazu erfassten Pumpenlast einen Strömungswiderstandsparameter zuordnet.

Die entsprechende Drehzahl des Förderelementes kann entweder gemessen oder, wenn der Rotor mittels eines Synchronantriebes antreibbar ist, auch vorgegeben werden.

Die Last der Pumpe wird vorteilhaft durch die Registrierung der Lagerkräfte gemessen, insbesondere durch Erfassung des notwendigen Spulenstroms zur Regelung eines ein Förderelement der Pumpe aktiv geregelt lagernden Magnetlagers bzw. der Axialposition des Rotors bei der Anwendung von VZP.

Zur Zuordnung von entsprechenden Strömungswiderstandsparametern zu den erfassten Messwerten weist vorteilhaft die Auswerteeinrichtung eine Speichereinrichtung mit abgespeicherten Kennfeldern für die Drehzahlen und Pumpenlasten, insbesondere gesondert nach verschiedenen Fluiden, auf.

Besonders vorteilhaft ist die Erfindung bei einer Axialpumpe anwendbar, die einen in einem geregelten Axiallager gelagerten Rotor aufweist, der mittels an diesem befestigten Förderschaufeln als Förderelement der Pumpe dient.

Durch den Antrieb des Rotors und die Beförderung eines Fluids in axialer Richtung wird in einer derartigen Axialpumpe eine Axialkraft als Reaktionskraft der Flüssigkeitsbeschleunigung erzeugt, die in dem Axiallager durch entsprechende magnetische Kräfte aufzufangen ist. Die Axialposition des Rotors wird mittels der Stromstärke einer Spule geregelt, die in dem Stator des Lagers, insbesondere zusätzlich zu einem permanenten Magneten, eine Zusatzmagnetkraft in Abhängigkeit von der Pumpenlast erzeugt, um eine Wunschposition des Rotors in axialer Richtung sicherzustellen.

Eine entsprechende Axialpumpe ist beispielsweise in der deutschen Patentanmeldung DE 101 23 138 B4 zusammen mit einem beispielhaften Lagerregelungsmechanismus beschrieben.

Somit stellt das erfindungsgemäße Verfahren und die Einrichtung zur erfindungsgemäßen Messung auch eine erfinderische neue Verwendung einer Pumpe dar, die mit sehr geringem zusätzlichen Aufwand die Durchführung der aufgabengemäß geforderten Vermessung eines schwierig zugänglichen, von einem Fluid durchströmbaren Bauteils ermöglicht.

Im Folgenden wird die Erfindung anhand eines Ausführungsbeispiels in einer Zeichnung gezeigt und nachfolgend beschrieben. Dabei zeigt
- Fig. 1: schematisch in einem Längsschnitt eine Axialpumpe, die für das erfindungsgemäße Messverfahren bestimmt ist,
- Fig. 2: ein Ablaufdiagramm, anhand dessen schematisch die Funktion des geregelten Magnetlagers dargestellt ist,
- Fig. 3: schematisch die Auswertung der erfassten Messgrößen,
- Fig. 4: eine Einrichtung zur Auswertung der Messungen sowie
- Fig. 5: ein Kennfeld zur Auswertung der Messungen.

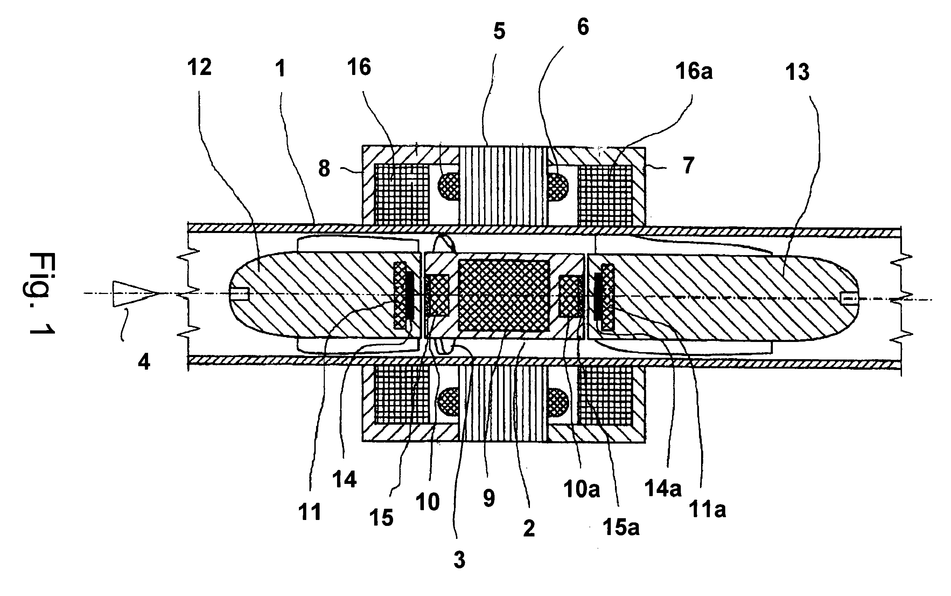

Fig. 1 zeigt schematisch in einem Längsschnitt eine magnetgelagerte Axialpumpe, wie sie beispielsweise als Blutpumpe für den menschlichen Körper Anwendung findet. Die Pumpe ist in ein zylindrisches Rohr 1 eingesetzt und weist einen Rotor 2 mit Rotorblättern 3 zum Vortrieb eines Fluids in Strömungsrichtung 4 auf.

Der Antrieb für den Rotor 2 sieht ein Blechpaket 5, Wicklungen 6 sowie Jochteile 7, 8 vor, die gemeinsam mit dem Blechpaket 5 einen hochpermeablen Magnetkreis bilden, der über Permanentmagnete 9 im Kern des Rotors 5 geschlossen wird, so dass insgesamt ein Synchronmotor mit außen liegendem Stator gebildet ist, der elektronisch kommutiert wird.

Der Rotor 5 ist mittels Permanentmagneten 10, 10a, deren Magnetachse parallel zur Flussrichtung 4 ausgerichtet ist, sowie ortsfesten ringförmigen Permanentmagneten 11, 11a in axialer Richtung magnetisch berührungsfrei gelagert.

Die Permanentmagnete 10, 11 und 10a, 11a sind jeweils so ausgerichtet, dass sie sich in axialer Richtung paarweise anziehen. Damit ist in axialer Richtung 4 bestenfalls ein labiles Gleichgewicht gebildet, so dass zur berührungsfreien Lagerung zusätzlich eine Regeleinrichtung vorgesehen werden muss. In radialer Richtung ist durch die Ringform der Magnete 11, 11a eine selbsttätige Zentrierung des Rotors 2 realisiert.

Zur Erfassung der axialen Position des Rotors 2 ist jeweils in den ortsfesten, in Verlängerung des Rotors 2 innerhalb des Rohres 1 liegenden Teilen der Axialpumpe 12, 13 je eine Sensorspule 14, 14a vorgesehen, der innerhalb des Rotors jeweils ein Kurzschlussring 15, 15a gegenüberliegt, so dass mittels der Induktivität der Sensorspulen 14, 14a jeweils der Abstand zum jeweiligen Kurzschlussring 15, 15a und damit die axiale Position des Rotors 2 gemessen werden kann.

Die entsprechenden Messgrößen werden als Eingangsgrößen einer Regeleinrichtung zugeleitet, die in Abhängigkeit von der gemessenen Position bzw. von der Differenz zur Sollposition des Rotors einen Strom durch zwei Steuerspulen 16, 16a steuert, die die jeweiligen Axialfelder der Permanentmagneten 11, 11a stärken oder schwächen, um die Anziehungskraft der Permanentmagneten 10, 11, 10a, 11a derart zu steuern, dass der Rotor 2 in axialer Richtung in seine Sollposition bewegt wird, bzw. in eine Position, an der der Strom durch die Steuerspulen gleich Null wird (VZP) .

Wird nun der Rotor 2 durch Einschalten des Drehantriebs derart in Drehung versetzt, dass ein in dem Rohr 1 befindliches Fluid in der Richtung 4 befördert wird, so ergibt sich eine Reaktionskraft, die der auf das Fluid in der Richtung 4 wirkenden Kraft entgegengesetzt ist und den Rotor 2 vorübergehend axial auslenkt.

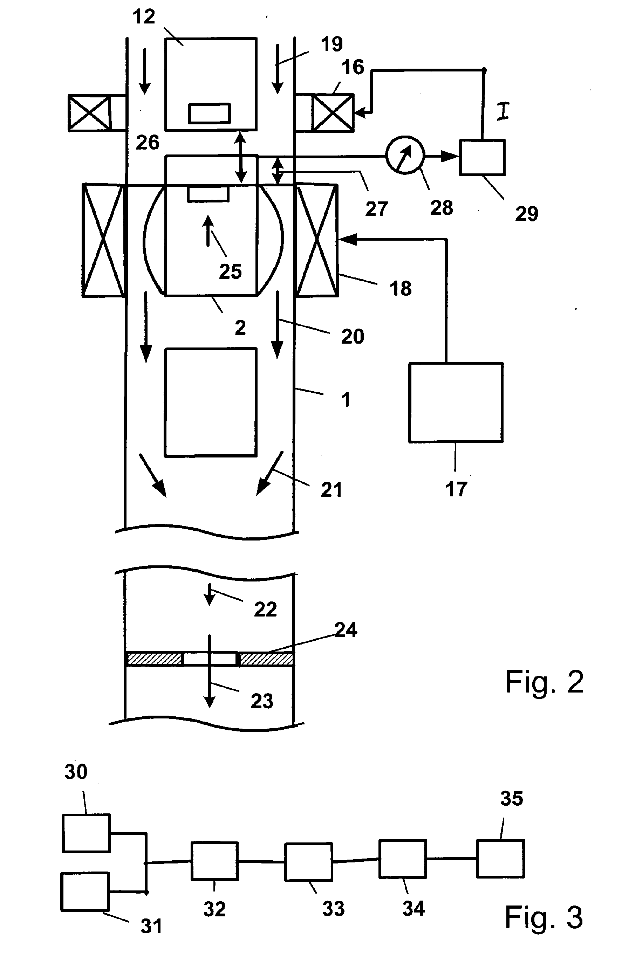

Dieser Vorgang ist näher anhand der Fig. 2 beschrieben, in der die in der Fig. 1 bereits gezeigten Elemente bei Übereinstimmung mit denselben Bezugszeichen bezeichnet sind.

Die Antriebssteuerung ist in der Fig. 2 mit 17 bezeichnet und wirkt auf eine in der Fig. 2 nur sehr schematisch dargestellte Antriebswicklung 18, die den Rotor 2 in Rotation versetzt. Handelt es sich um einen Synchronmotor, so ist mit der Antriebssteuerung 17 bereits eine Drehzahl vorgebbar. Handelt es sich um einen sensorlosen bürstenlosen Gleichstrommotor, kann die Drehzahl aus der induzierten Gegenspannung ermittelt werden. Anderenfalls kann im Bereich des Rotors 2 zusätzlich ein Drehzahlsensor zur Messung der Drehzahl vorgesehen werden.

Wenn der Rotor 2 in Rotation versetzt ist, fließt das Fluid, wie dies in der Fig. 2 mit den Pfeilen 19, 20, 21, 22 und 23 dargestellt ist, durch das Rohr 1 bzw. seine Fortsetzung. Das in dem dargestellten Fall zu vermessende fluiddurchströmte Element ist mit 24 bezeichnet und stellt in dem speziellen dargestellten Fall eine Lochblende dar, die der Fluidströmung einen gewissen Widerstand entgegensetzt, der vermessen werden soll. Dieses Beispiel ist selbstverständlich nur als schematisch anzusehen und steht für beliebige fluiddurchströmbare Elemente, die auch wesentlich komplexer gestaltet sein können.

Wesentlich bei der Darstellung der Erfindung ist lediglich, dass die Strömungswiderstandsparameter des Elementes 24 ausschließlich durch Erfassung von Messgrößen im Bereich der Axialpumpe bestimmt werden können.

Beim Betrieb des Pumpenantriebs wie oben dargestellt ergibt sich eine Kraft auf den Rotor 2, die in Richtung des Pfeils 25 gerichtet ist und den axialen Spalt zu dem ortsfesten Bauteil 12 zu verkleinern sucht. Die Größe dieses Spaltes ist in der Fig. 2 mit dem Bezugszeichen 26 bezeichnet, während die Abweichung der Rotorposition von der Mittenposition/Sollposition des Rotors mit 27 bezeichnet ist. Diese Abweichung wird mittels des Sensors 28 erfasst, der diese Größe an die Steuer-/Regeleinrichtung 29 für die Axialposition des Rotors weitergibt. Diese Steuer-/Regeleinrichtung bestimmt entsprechend den notwendigen Strom i durch die Steuerspule 16, die das Axialmagnetfeld beeinflusst, welches auf wenigstens einen der Permanentmagneten in dem Rotor 2 wirkt.

Auf diese Weise wird die Axialposition des Rotors geregelt und stabil in der Mittenposition gehalten.

Die zur Aussteuerung notwendige Stromstärke i ist ein Maß für die auf den Rotor 2 wirkende Gegenkraft bzw. die Pumpenlast oder auch den durch die Pumpe erzeugten Druckunterschied in dem geförderten Fluid.

Alternativ kann der Rotor durch Einspeisung eines geeigneten Stromes i durch die Steuerspule 16 an eine solche axiale Position bewegt werden, an dem die permanentmagnetischen Kräfte die angreifende Kraft vollständig kompensieren. An dieser Position wird der Strom i nahezu 0. Die Abweichung 27 von der Mittenposition des Rotors kann mittels des Sensors 28 erfasst werden und ist ein Maß für die auf den Rotor 2 wirkende Gegenkraft bzw. die Pumpenlast oder auch den durch die Pumpe erzeugten Druckunterschied in dem geförderten Fluid. Diese Methode wird, wie oben bereits eingeführt, Virtual Zero Power Control (VZP) genannt.

In der Fig. 3 ist schematisch in einem Ablaufdiagramm der Ablauf der Messung dargestellt, wobei zunächst in einem ersten Schritt 31 die Lagerregelung eingeschaltet und dann in einem Schritt 30 der Antrieb gestartet wird. In einem weiteren Schritt 32 wird der zur Axialstabilisierung notwendige Steuerstrom für die Lagersteuerung bzw. die axiale Rotorposition gemessen und in einem Schritt 33 die Drehzahl des Pumpenantriebs erfasst. Diese Werte werden in einem nächsten Auswerteschritt 34 anhand eines Kennfeldes unter Berücksichtigung der bekannten Zähigkeit des Fluids einem Strömungswiderstandsparameter des unbekannten Elementes 24 zugeordnet, und dieser wird in einem Ausgabeschritt 35 ausgegeben.

Zur Ermittlung dynamischer Strömungswiderstandsparameter wie Trägheit der Flüssigkeitssäule und Elastizität der Bauteilwand muss anstelle einer stationären Drehzahl ein dynamisches Drehzahlstimulationssignal verwendet werden. Die Pumpenlast und der Volumenstrom werden jeweils unter Nutzung der Drehzahlinformation und der ermittelten Störkraft berechnet. Mit Methoden der Systemidentifikation können die gesuchten Parameter ermittelt werden.

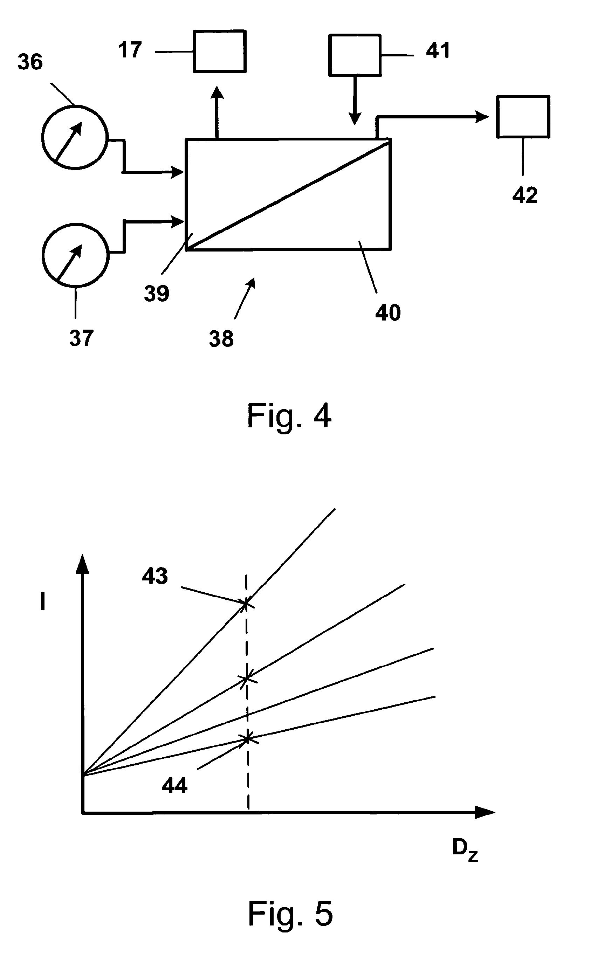

Anhand der Fig. 4 soll im Folgenden die Struktur der Messeinrichtung dargestellt werden.

Dabei ist mit 36 der Sensor für die Stromstärke bezeichnet, die für die axiale Lagerstabilisierung notwendig ist, 36 kann alternativ im Falle der Verwendung eines Virtual Zero Power Control - Regelsystems auch den Sensor für die axiale Rotorposition bezeichnen; 37 bezeichnet einen Drehzahlsensor des Rotors 2 oder einen Sensor für die Leistungsaufnahme. Die Sensoren sind mit der Auswerteeinrichtung 38 verbunden, die eine Vergleichseinrichtung 39 sowie eine Speichereinrichtung 40 aufweist. In der Speichereinrichtung 40 sind die entsprechenden Kennfelder für Drehzahl und Strom- bzw. Positionswerte hinterlegt. Die Auswerteeinrichtung 38 steuert zudem den Antrieb 17 des Rotors an. Außerdem kann die Auswerteeinrichtung 39 über die Eingabeeinheit 41 Informationen über die Art bzw. Viskosität des verwendeten Fluids erhalten.

Im Anschluss an den Vergleichsvorgang gibt die Auswerteeinrichtung 38 den ermittelten Strömungswiderstandsparameter an eine Ausgabeeinrichtung 42.

Die Auswertung kann statt durch Vergleich von Messwerten mit einem Kennfeld auch durch Berechnung anhand eines Auswertungsalgorithmus erfolgen.

In der Fig. 5 ist schematisch ein Kennfeld gezeigt, bei dem jeweils Drehzahlen auf der x-Achse und entsprechende Stromstärken der Steuerspulen für die Axialstabilisierung des Rotors auf der y-Achse aufgetragen sind. Jeder durchgezogene Graph bedeutet den Zusammenhang zwischen Drehzahl und Stromstärke bei einem bestimmten, der Pumpe nachgeschalteten Strömungselement mit einem definierten Strömungswiderstand. Je höher der Strömungswiderstand des nachgeschalteten fluiddurchströmbaren Elementes ist, umso stärker steigt die Axialkraft auf das Lager des Rotors. Bei derselben Drehzahl des Rotors bedeutet der Messwert 43 einen höheren Strömungswiderstand des zu vermessenden Elementes als der Messwert 44, da der Rückstau zur Axialpumpe und damit die Axialkraft auf das Lager stärker ist. Auf diese Weise lässt sich durch die Zuordnung des Messwertpaares zu einer bestimmten Kennlinie des Feldes nach entsprechender Einmessung ein Strömungswiderstandsparameter eines zu vermessenden Elementes bestimmen. Analog dazu kann man statt der Stromstärke bei Verwendung von VZP die Axialposition nutzen.

Die Erfindung erlaubt somit, mit minimalen zusätzlichen Maßnahmen an einer Axialpumpe deren Verwendung als Messeinrichtung zur Vermessung von strömungstechnischen Eigenschaften eines schwierig zugänglichen, mit der Pumpe zu verbindenden Elementes.

## Patentansprüche

1. Verfahren zur Messung eines oder mehrerer Strömungswiderstandsparameter eines von einem Fluid durchströmbaren Elementes, bei dem mittels einer Pumpe (2, 12, 13) mit einem rotierenden Förderelement (2) Fluid durch das Element gefördert wird, wobei die Pumpe ein aktiv geregeltes Magnetlager (10, 10a, 11, 11a, 16, 16a) zur Lagerung des Förderelementes (2) aufweist und wobei die von der Pumpe über dem Rotor erzeugte Druckdifferenz ("Last") am Magnetlager erfasst und daraus insbesondere unter Berücksichtigung der Drehzahl des Förderelementes der Strömungswiderstandsparameter bestimmt wird.

2. Verfahren nach Anspruch 1, **dadurch gekennzeichnet, dass** wenigstens einer der Strömungswiderstandsparameter nacheinander für verschiedene Drehzahlen des Förderelementes (2) bestimmt wird.

3. Verfahren nach Anspruch 1, **dadurch gekennzeichnet, dass** die Strömungswiderstandsparameter durch Messung der Reaktion auf geeignete dynamische Testsignale für die Motordrehzahl bestimmt werden.

4. Verfahren nach Anspruch 1, 2 oder 3, **dadurch gekennzeichnet, dass** der erfassten Last und der erfassten Drehzahl unter Berücksichtigung der Art des vorliegenden Fluids anhand eines gespeicherten Kennfeldes oder eines Algorithmus ein Volumenstrom zugeordnet wird.

5. Verfahren nach Anspruch 1, 2, 3 oder 4, **dadurch gekennzeichnet, dass** der erfassten Last und der erfassten Drehzahl unter Berücksichtigung der Art des vorliegenden Fluids anhand eines gespeicherten Kennfeldes oder eines Algorithmus ein Strömungswiderstandsparameter eines von dem Fluid durchströmten Elementes (24) zugeordnet wird.

6. Verfahren nach einem der vorangehenden Patentansprüche, **dadurch gekennzeichnet, dass** die Messgröße eine Stromstärke einer ein Magnetfeld erzeugenden Spule (16, 16a) ist.

7. Verfahren nach einem der vorangehenden Patentansprüche, **dadurch gekennzeichnet, dass** die Messgröße eine axiale Verschiebung (27) des Rotors aus seiner Mittenposition ist.

8. Verfahren nach einem der vorangehenden Patentansprüche, **dadurch gekennzeichnet, dass** der Strömungswiderstandsparameter für wenigstens zwei verschiedene Fluide bestimmt wird.

9. Einrichtung zur Messung eines Strömungswiderstandsparameters eines von einem Fluid durchströmbaren Elementes (24) mit einer an das Element anschließbaren, ein aktiv regelbar magnetisch gelagertes rotierendes Förderelement (2) aufweisenden Pumpe (2, 12, 13), einer ersten Erfassungseinrichtung (36) für die Drehzahl oder die Energieaufnahme des Förderelementes, einer zweiten Erfassungseinrichtung (37) für die Last der Pumpe sowie einer Auswerteeinrichtung (38), die wenigstens einem Wertepaar aus einer Drehzahl und einer dazu erfassten Pumpenlast einen Strömungswiderstandsparameter zuordnet.

10. Einrichtung nach Anspruch 9, **dadurch gekennzeichnet, dass** die Auswerteeinrichtung (38) eine Speichereinrichtung (40) mit abgespeicherten Kennfeldern für Drehzahlen und Pumpenlasten aufweist.

11. Einrichtung nach Anspruch 9 oder 10, **dadurch gekennzeichnet, dass** die zweite Erfassungseinrichtung (37) die Last als Messgröße des magnetischen Lagers (10, 10a, 11, 11a, 16, 16a) des Förderelementes (2) oder eine mit dieser Messgröße in eindeutiger Weise zusammenhängende Größe erfasst.

12. Einrichtung nach Anspruch 9, 10 oder 11, **dadurch gekennzeichnet, dass** die Pumpe eine Axialpumpe mit einem axial in einem magnetischen, aktiv geregelten Axiallager (10, 10a, 11, 11a, 16, 16a) gelagerten Rotor (2) ist.

13. Verwendung einer Fluidpumpe, die ein rotierendes Förderelement (2) und ein aktiv geregeltes Magnetlager für das Förderelement aufweist, zur Messung eines Strömungswiderstandsparameters eines von einem Fluid durchströmbaren Elementes gemäß einem Verfahren nach einem der Ansprüche 1 bis 8.
